# EUROPÄISCHE PATENTANMELDUNG

(11) **EP 2 792 864 A1**
(43) Veröffentlichungstag der Anmeldung: **22.10.2014**
(21) Anmeldenummer: 13002003.5
(22) Anmeldetag: 17.04.2013
(51) Int. Cl.: F01N 3/20, F01N 1/08

(54) **Abgasbehandlungseinrichtung für einen Abgasstrom einer Brennkraftmaschine**

(71) Anmelder: ROTH-TECHNIK AUSTRIA Gesellschaft m.b.H., 3193 St. Aegyd/Neuwalde (AT)
(72) Erfinder: Angele, Armin, 97980 Bad Mergentheim (DE); Böhm, Markus, 76571 Gaggenau (DE)
(74) Vertreter: Wiedemann, Markus

(57) **Zusammenfassung**

Die Erfindung betrifft eine Abgasbehandlungseinrichtung (1) für einen Abgasstrom (2) einer Brennkraftmaschine, mit
a) einem rohrförmigen oder zylindrischen ersten Gehäuse (6) mit einer Abgaseinlassöffnung (8) zum Einführen des Abgasstroms (2) in das erste Gehäuse (6) und mit einer Abgasauslassöffnung (8) zum Ausführen des Abgasstroms (2) aus dem ersten Gehäuse (6) sowie mit einem rohrförmigen oder zylindrischen zweiten Gehäuse (14) mit einer Abgaseinlassöffnung (12) zum Einführen des Abgasstroms (2) in das zweite Gehäuse (14) und mit einer Abgasauslassöffnung (36) zum Ausführen des Abgasstroms (2) aus dem zweiten Gehäuse, wobei das erste Gehäuse (6) und das zweite Gehäuse (14) parallel zueinander angeordnet sind,
b) einer Überströmkammer (10), welche die Abgasauslassöffnung (8) des ersten Gehäuses (6) mit der Abgaseinlassöffnung (12) des zweiten Gehäuses (14) verbindet und an dem ersten Gehäuse (6) und dem zweiten Gehäuse (14) derart stirnseitig angeordnet ist, das die Strömungsrichtung des Abgasstroms (2) in dem ersten Gehäuse (6) gegenüber der Strömungsrichtung des Abgasstroms (2) in dem zweiten Gehäuse (14) gegenläufig ist, und
c) Einspritzmitteln (30) zum Einspritzen von Reduktionsmittel in den im zweiten Gehäuse (14) geführten Abgasstrom

Die Erfindung sieht vor, dass
d) in der Überströmkammer (10) Leitmittel (26) für den von der Abgasauslassöffnung (8) des ersten Gehäuses (6) in die Abgaseinlassöffnung (12) des zweiten Gehäuses (14) strömenden Abgasstrom (2) angeordnet sind, welche den Abgasstrom (2) in die Abgaseinlassöffnung (12) des zweiten Gehäuses (14) derart einleiten, dass sich im Inneren des zweiten Gehäuses (14) ein spiralförmiger Abgasstrom (2) mit einer Komponente in Axialrichtung und einer Komponente in Umfangsrichtung sowie mit einer Strömungsmittelachse (34) ausbildet, bei dem die in Axialrichtung wirkende Strömungsgeschwindigkeit ausgehend von der Strömungsmittelachse (34) in radialer Richtung gesehen ansteigt, und dass
e) die Einspritzmittel (30) derart angeordnet sind, dass das Reduktionsmittel (32) in den spiralförmigen Abgasstrom (2) im zweiten Gehäuse (14) im Wesentlichen koaxial mit der Strömungsmittelachse (34) des dort spiralförmigen Abgasstroms (2) eingespritzt wird.

## Beschreibung

### Stand der Technik

Die Erfindung betrifft eine Abgasbehandlungseinrichtung für einen Abgasstrom einer Brennkraftmaschine, mit einem rohrförmigen oder zylindrischen ersten Gehäuse mit einer Abgaseinlassöffnung zum Einführen des Abgasstroms in das erste Gehäuse und mit einer Abgasauslassöffnung zum Ausführen des Abgasstroms aus dem ersten Gehäuse sowie mit einem rohrförmigen oder zylindrischen zweiten Gehäuse mit einer Abgaseinlassöffnung zum Einführen des Abgasstroms in das zweite Gehäuse und mit einer Abgasauslassöffnung zum Ausführen des Abgasstroms aus dem zweiten Gehäuse, wobei das erste Gehäuse und das zweite Gehäuse parallel zueinander angeordnet sind, und mit einer Überströmkammer, welche die Abgasauslassöffnung des ersten Gehäuses mit der Abgaseinlassöffnung des zweiten Gehäuses verbindet und an dem ersten Gehäuse und dem zweiten Gehäuse derart stirnseitig angeordnet ist, das die Strömungsrichtung des Abgasstroms in dem ersten Gehäuse gegenüber der Strömungsrichtung des Abgasstroms in dem zweiten Gehäuse gegenläufig ist, sowie mit Einspritzmitteln zum Einspritzen von Reduktionsmittel in den im zweiten Gehäuse geführten Abgasstrom, gemäß dem Oberbegriff von Anspruch 1.

Eine solche gattungsgemäße Abgasbehandlungseinrichtung ist beispielsweise in der DE 10 2005 002 289 B4 offenbart. Dort wird der Abgasstrom in einen rohrförmigen Einlass eines Basisgehäuses eingeleitet und mittels einer stirnseitigen Überströmkammer in ein parallel zum Einlass angeordnetes rohrförmiges Anbaugehäuse in einen gegenläufigen Abgasstrom umgeleitet. Eine solche Anordnung ist besonders bei beschränktem Bauraum in Längsrichtung vorteilhaft, weil dann die Abgasbehandlungseinrichtung kurz bauen kann. An dem von der stirnseitigen Überströmkammer abgewandten Ende des Anbaugehäuses wird ein Reduktionsmittel in radialer Richtung in den Abgasstrom eingespritzt.

Bei sogenannten SCR-Katalysatoren erfolgt eine selektive katalytische Reduktion von Stickoxiden in einer Abgasströmung zu unschädlichen Stoffen. Reduktionskatalysatoren haben die Aufgabe, die Abgase einer Brennkraftmaschine mittels selektiver katalytischer Reaktion von Stickoxiden zu reinigen, ohne dass hierbei das eingesetzte Reduktionsmittel an die Umwelt abgegeben wird. Der Reduktionskatalysator reduziert mittels eines Reduktionsmittels (meist eine Harnstoff-WasserLösung, sog. AdBlue®) unter Anwesenheit von Sauerstoff Stickoxide zu molekularem Stickstoff und Wasser (SCR-Verfahren). Als Quelle des Reduktionsmittels wird in der Regel eine das Reduktionsmittel spendende Substanz wie Harnstoff zugegeben, welcher im Abgas Ammoniak freisetzt. Im Reduktionskatalysator wird dann das Ammoniak mit den Stickoxiden zu molekularem Stickstoff und Wasser reduziert. Hierzu ist in einem Vorratsbehälter eine wässrige Harnstofflösung bevorratet, die über eine Zuführleitung einem dem Katalysator vorgeordnetes Abgasrohr zugeleitet wird, um ein Gasgemisch von Abgas und Reduktionsmittel zu erzeugen. Eine solche Abgasnachbehandlungsvorrichtung mittels Reduktionskatalysator ist beispielsweise in der DE 20 2006 020 U1 beschrieben.

Anzustreben ist eine möglichst gute Vermischung des eingespritzten Reduktionsmittels mit dem Abgasstrom, damit die anschließende katalytische Reduktion von Stickoxiden in der Abgasströmung innerhalb des Reduktionskatalysators möglichst umfänglich ablaufen kann.

Bei Abgasbehandlungseinrichtungen für Brennkraftmaschinen von Kraftfahrzeugen besteht oft das Problem eines begrenzten Einbauraums. Dies bedingt relativ kleine Strömungsquerschnitte und Strömungsdurchmesser von Gehäusen, in denen der Abgasstrom zur Einspritzung des Reduktionsmittels geführt wird. Damit ergeben sich aber relativ hohe Strömungsgeschwindigkeiten des Abgasstroms, was eine gute Durchmischung mit dem eingespritzten Reduktionsmittel erschwert, weil die Verweilzeit der Reduktionsmitteltröpfchen in dem Abgasstrom gering ist und die hohe Strömungsgeschwindigkeit des Abgasstroms verhindert, dass sich ein größerer Spraykegel des Reduktionsmittels im Bereich der Einspritzdüse ausbilden kann. Wünschenswert wären daher geringere Strömungsgeschwindigkeiten des Abgasstroms im Bereich der Einspritzdüse des Reduktionsmittels.

### Aufgabe der Erfindung

Der Erfindung liegt demgegenüber die Aufgabe zugrunde, eine Abgasbehandlungseinrichtung für einen Abgasstrom einer Brennkraftmaschine der eingangs erwähnten Art derart weiter zu entwickeln, dass sich eine verbesserte Durchmischung des Reduktionsmittels mit dem Abgasstrom auch bei beengtem Strömungsdurchmesser ergibt.

Diese Aufgabe wird erfindungsgemäß durch die Merkmale von Anspruch 1 gelöst.

### Offenbarung der Erfindung

Die Erfindung sieht vor, dass in der Überströmkammer Leitmittel für den von der Abgasauslassöffnung des ersten Gehäuses in die Abgaseinlassöffnung des zweiten Gehäuses strömenden Abgasstrom angeordnet sind, welche den Abgasstrom in die Abgaseinlassöffnung des zweiten Gehäuses derart einleiten, dass sich im Inneren des zweiten Gehäuses ein spiralförmiger Abgasstrom mit einer Komponente in Axialrichtung und einer Komponente in Umfangsrichtung sowie mit einer Strömungsmittelachse ausbildet, bei dem die Strömungsgeschwindigkeit der in Axialrichtung wirkenden Komponente des Abgasstroms ausgehend von der Strömungsmittelachse in radialer Richtung gesehen ansteigt, und dass die Einspritzmittel derart angeordnet sind, dass das Reduktionsmittel in den spiralförmigen Abgasstrom im rohrförmigen Gehäuse im Wesentlichen koaxial mit der Strömungsmittelachse des dort spiralförmigen Abgasstroms eingespritzt wird.

Bei einer derartigen Ausbildung ist die Strömungsgeschwindigkeit der in Axialrichtung wirkenden Komponente des Abgasstroms im Bereich der Strömungsmittelachse am geringsten und kann beispielsweise sogar gleich Null sein. Ausgehend von der Strömungsmittelachse steigt dann die Strömungsgeschwindigkeit der in Axialrichtung wirkenden Komponente des Abgasstroms in radialer Richtung gesehen an, um kurz vor der radial inneren Wandung des zweiten Gehäuses einen Maximalwert zu erreichen. Unmittelbar an der radial inneren Wandung ist die Strömungsgeschwindigkeit naturgemäß gleich Null.

Die sehr geringe Strömungsgeschwindigkeit des Abgasstroms im Bereich der Strömungsmittelachse und damit im Bereich der Einspritzung oder Eindüsung des Reduktionsmittels ist insofern vorteilhaft, als sich am Einspritzpunkt des Reduktionsmittels der Strömungskegel des Reduktionsmittels sehr gut ausbilden kann. Dies sorgt für eine gute Durchmischung des Reduktionsmittels mit dem Abgasstrom. Die Einspritzrichtung des Reduktionsmittels ist dabei bevorzugt in Strömungsrichtung der in Axialrichtung wirkenden Komponente des Abgasstroms.

Weiterhin werden die im Bereich der der Strömungsmittelachse eingespritzten Reduktionsmitteltröpfchen durch die innerhalb des zweiten Gehäuses wirkende spiralförmige Abgasströmung nach radial außen geführt und mit Hilfe der Zentrifugalkräfte gut mit der Abgasströmung vermischt.

Nicht zuletzt besitzt die Abgasströmung aufgrund ihrer spiralförmigen Ausbildung in dem zweiten Gehäuse gegenüber einer ausschließlich axialen Strömung einen größeren Strömungsweg und eine größere Verweildauer, was sich ebenfalls in einer verbesserten Durchmischung des Reduktionsmittels mit der Abgasstrom resultiert.

Durch die in den Unteransprüchen aufgeführten Maßnahmen sind vorteilhafte Weiterbildungen und Verbesserungen der im Patentanspruch 1 angegebenen Erfindung möglich.

Bevorzugt ist die Strömungsmittelachse des spiralförmigen Abgasstroms koaxial mit einer Mittelachse des zweiten Gehäuses. Dies bedingt eine einfache Bauausführung, als dann das Reduktionsmittel koaxial oder im Bereich der Mittelachse des zweiten Gehäuses eingespritzt wird.

Bevorzugt sind die Leitmittel in der Überströmkammer derart ausgebildet und angeordnet, dass der spiralförmige Abgasstrom im Inneren des zweiten Gehäuses eine Steigung aufweist, welche kleiner oder gleich dem Strömungsdurchmesser des zweiten Gehäuses ist. Dies trägt ebenfalls zu einer guten Durchmischung des Reduktionsmittels mit dem Abgasstrom bei, weil dann die Verweildauer in dem zweiten Gehäuse relativ groß ist.

Beispielsweise sind die Abgasauslassöffnung des ersten Gehäuses und die Abgaseinlassöffnung des zweiten Gehäuses koplanar angeordnet.

Gemäß einer besonders zu bevorzugenden Maßnahme ist der Strömungsdurchmesser des ersten Gehäuses größer als der Strömungsdurchmesser des zweiten Gehäuses, indem die Einspritzung des Reduktionsmittels in den Abgasstrom stattfindet. Dies ist insbesondere dann der Fall, wenn sehr wenig Bauraum zur Verfügung steht.

Dabei kann im Querschnitt gesehen die Überströmkammer einen ersten kreisförmigen Abschnitt mit dem Strömungsdurchmesser des ersten Gehäuses und einen zweiten kreisförmigen Abschnitt mit dem Strömungsdurchmesser des zweiten Gehäuses aufweisen und zwischen dem ersten Abschnitt und dem zweiten Abschnitt ein sich verjüngender Abschnitt vorgesehen sein, an dem die Leitmittel ausgebildet sind.

Die Leitmittel beinhalten bevorzugt wenigstens eine Leitschaufel, welche sich von einer inneren Wandung des sich verjüngenden Abschnitts der Überströmkammer in einer den Strömungsquerschnitt durch den sich verjüngenden Abschnitt verengenden Weise winkelig weg erstreckt. Andererseits kann die wenigstens eine Leitschaufel senkrecht zu einer gedachten Ebene angeordnet sein, welche senkrecht zu einer Mittelachse des ersten Gehäuses und senkrecht zu einer Mittelachse des zweiten Gehäuses ist. Hierdurch wird die Abgasströmung beschleunigt und in die Einlassöffnung des zweiten Gehäuses in im Wesentlichen tangentialer Richtung eingeleitet, um dort die spiralförmige Strömung auszubilden.

Zur Realisierung kann beispielsweise im Querschnitt der Überströmkammer gesehen die wenigstens eine Leitschaufel senkrecht zu einer gedachten, sich von einer Mittelachse des ersten Gehäuses weg erstreckenden Radiuslinie angeordnet sein, welche an ihrem leitschaufelseitigen Ende einen Ursprungspunkt der Leitschaufel markiert, wobei die Radiuslinie in einem Winkelbereich von 49 Grad ausgehend von einem Grenzwinkel liegt und wobei der Grenzwinkel 76,5 Grad ausgehend von einer die Mittelachse des ersten Gehäuses und eine Mittelachse des zweiten Gehäuses enthaltenden Ebene gemessen wird.

Gemäß einer Weiterbildung weisen die Einspritzmittel eine Einspritzdüse für das Reduktionsmittel auf, welche im Wesentlichen in der Ebene der Abgaseinlassöffnung des zweiten Gehäuses angeordnet ist. Dann kann der ausgehend von der Einspritzöffnung gebildete Einspritzkegel des Reduktionsmittels gut in die von den Leitmitteln dort erzeugte spiralförmige Abgasströmung eintauchen.

Besonders bevorzugt beinhaltet die Abgasbehandlungseinrichtung wenigstens einen SCR-Katalysator, welcher in Strömungsrichtung des Abgasstroms gesehen den Einspitzmitteln nachgeordnet ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Ausführungsbeispiele der Erfindung sind in der Zeichnung dargestellt und in der nachfolgenden Beschreibung näher erläutert. In der Zeichnung zeigt
- Fig.1: eine Längsquerschnittsdarstellung einer Abgasnachbehandlungsvorrichtung gemäß einer bevorzugten Ausführungsform der Erfindung;
- Fig.2: eine Querschnittsdarstellung einer Überströmkammer der Abgasnachbehandlungsvorrichtung von Fig.1;
- Fig.3: eine schematische Darstellung des Strömungsverlaufs des Abgasstroms innerhalb der Abgasbehandlungsvorrichtung von Fig.1 im Längsquerschnitt gesehen;
- Fig.4: eine schematische Darstellung des Strömungsverlaufs des Abgasstroms innerhalb der Abgasbehandlungsvorrichtung von Fig.1 quer zur Längsrichtung gesehen;
- Fig.5: eine Querschnittsdarstellung der Überströmkammer der Abgasnachbe-handlungsvorrichtung von Fig.2 mit verschiedenen Positionen einer Leitschaufel.

### Beschreibung der Ausführungsbeispiele

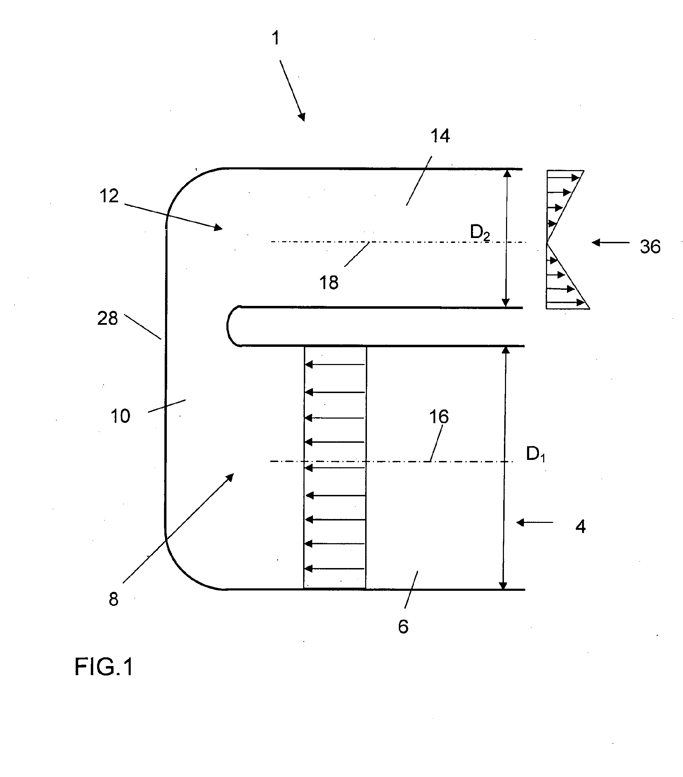

In Fig.1 bis Fig.5 sind bevorzugte Ausführungsformen einer Abgasnachbehandlungsvorrichtung 1 einer Brennkraftmaschine eines Fahrzeugs gezeigt, insbesondere einer selbstzündenden Dieselbrennkraftmaschine eines schweren Nutzfahrzeugs. Denkbar ist die Verwendung der Abgasnachbehandlungsvorrichtung 1 jedoch in jeder Art von Fahrzeug wie bei geländegängigen oder straßengebundenen Fahrzeugen sowie auch für stationäre Brennkraftmaschinen.

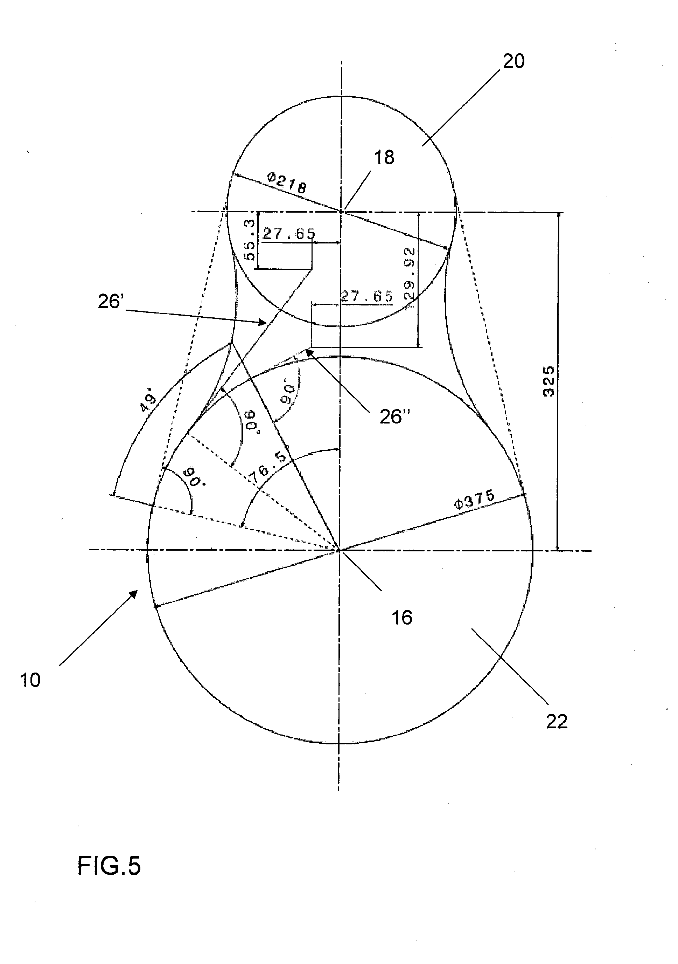

Die Brennkraftmaschine erzeugt einen durch in den Figuren durch Pfeile symbolisierten Abgasstrom 2, welcher nach seiner Erzeugung in eine Abgaseinlassöffnung 4 an einem Ende eines ersten rohrförmigen oder zylindrischen Gehäuses 6 der Abgasnachbehandlungsvorrichtung 1 eingeleitet wird (Fig.1). Das erste Gehäuse 6 bildet daher einen Teil der Abgasnachbehandlungsvorrichtung 1 und weist eine Innenwandung zur Begrenzung seines Strömungsdurchmessers D₁ auf, welcher beispielsweise 375 mm beträgt (Fig.5).

Der Abgasstrom 2 in dem ersten Gehäuse 6 ist bevorzugt laminar und in Fig.1 idealisiert durch die gleich langen Pfeile wiedergegeben, welche eine im Wesentlichen gleich große Strömungsgeschwindigkeit in Axialrichtung bezogen auf ihre radiale Ausdehnung symbolisieren soll. Diese Darstellung ist idealisiert. In Wirklichkeit ist die Strömungsgeschwindigkeit wegen Adhäsion an der radial inneren Wandung des ersten Gehäuses 6 gleich Null.

Das erste Gehäuse 6 weist außerdem bevorzugt an seinem anderen Ende eine Abgasauslassöffnung 8 zum Ausführen des Abgasstroms 2 auf, welche bevorzugt unmittelbar in eine stirnseitig angeordnete Überströmkammer 10 mündet, durch welche der Abgasstrom 2 in eine Abgaseinlassöffnung 12 an einem Ende eines zweiten rohrförmigen oder zylindrischen Gehäuses 14 umgeleitet wird, unter Umkehrung der Strömungsrichtung des Abgasstroms 2. Mit anderen Worten ist die Strömungsrichtung des Abgasstroms 2 in dem ersten Gehäuse 6 gegenüber der Strömungsrichtung des Abgasstroms 2 in dem zweiten Gehäuse 14 parallel und gegenläufig. Das erste Gehäuse 6 und das zweite Gehäuse 14 sind bevorzugt parallel zueinander angeordnet, wobei der Abgasstrom das zweite Gehäuse durch eine Abgasauslassöffnung 36 verlässt. Der Strömungsdurchmesser D₂ des zweiten Gehäuses beträgt beispielsweise 218 mm (Fig.5).

Beispielsweise sind die Abgasauslassöffnung 8 des ersten Gehäuses 6 und die Abgaseinlassöffnung 12 des zweiten Gehäuses koplanar in einer Ebene angeordnet, welche senkrecht zu einer Mittelachse 16 des ersten Gehäuses 6 wie auch zu einer Mittelachse 18 des zweiten Gehäuses 14 ist. Weiterhin ist der Strömungsdurchmesser D₁ des ersten Gehäuses 6 bevorzugt größer als der Strömungsdurchmesser D₂ des zweiten Gehäuses 14, beispielsweise beträgt der Strömungsdurchmesser D₁ des ersten Gehäuses 6 das Eineinhalbfache des Strömungsdurchmessers D₂ des zweiten Gehäuses 14. Unter dem "Strömungsdurchmesser" sind dabei die Durchmesser der im Querschnitt durchströmten Fläche des ersten Gehäuses 6 und des zweiten Gehäuses 14 zu verstehen, also beispielsweise deren Innendurchmesser, welcher den jeweiligen Strömungsquerschnitt begrenzt.

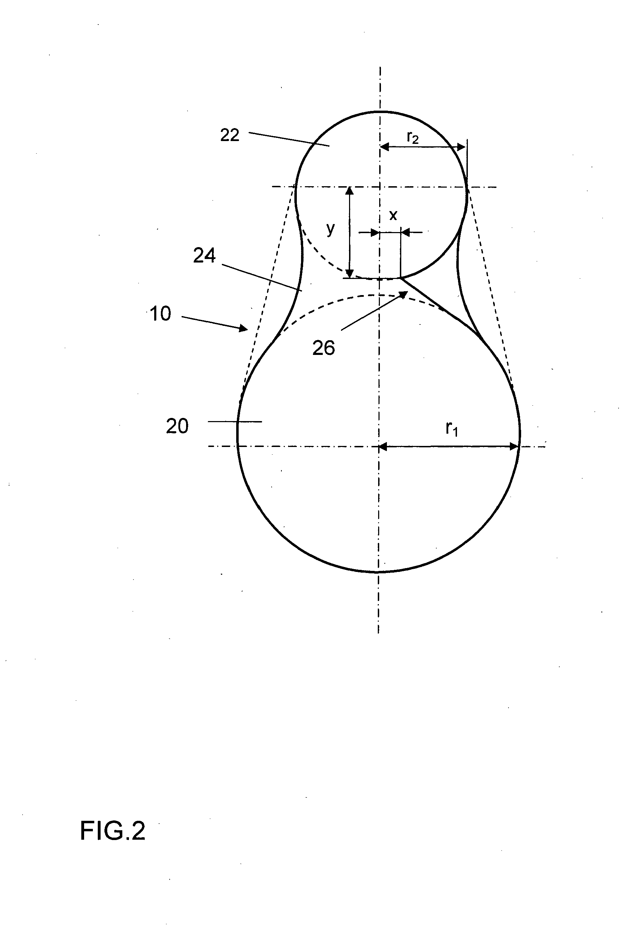

In Fig.2 ist die Überströmkammer 10 im Querschnitt gezeigt. Die Überströmkammer 10 ist ein im Wesentlichen topfförmiges Gebilde mit ihrer Öffnung zu der Abgasauslassöffnung 8 der ersten Gehäuses 6 und zu der Abgaseinlassöffnung 12 des zweiten Gehäuses 14 hin. Die Überströmkammer 10 weist im Querschnitt gesehen einen ersten kreisförmigen Abschnitt 20 mit dem Strömungsdurchmesser D₁ des ersten Gehäuses 6 und einen zweiten kreisförmigen Abschnitt 22 mit dem Strömungsdurchmesser D₂ des zweiten Gehäuses 14 auf. Zwischen dem ersten Abschnitt 20 und dem zweiten Abschnitt 22 ist ein sich verjüngender Abschnitt 24 ausgebildet, in dem oder an dem wenigstens eine Leitschaufel 26 für den Abgasstrom 2 angeordnet ist bzw. ihre Befestigung aufweist. Ein Boden 28 der topfförmigen Überströmkammer 10 ist beispielsweise parallel zu der Ebene der Abgasauslassöffnung 8 des ersten Gehäuses 6 und der Abgaseinlassöffnung 12 des zweiten Gehäuses 14 angeordnet. Die Überströmkammer 10 wird bei der Montage daher bevorzugt stirnseitig an beide Gehäuse 6, 14 angesetzt.

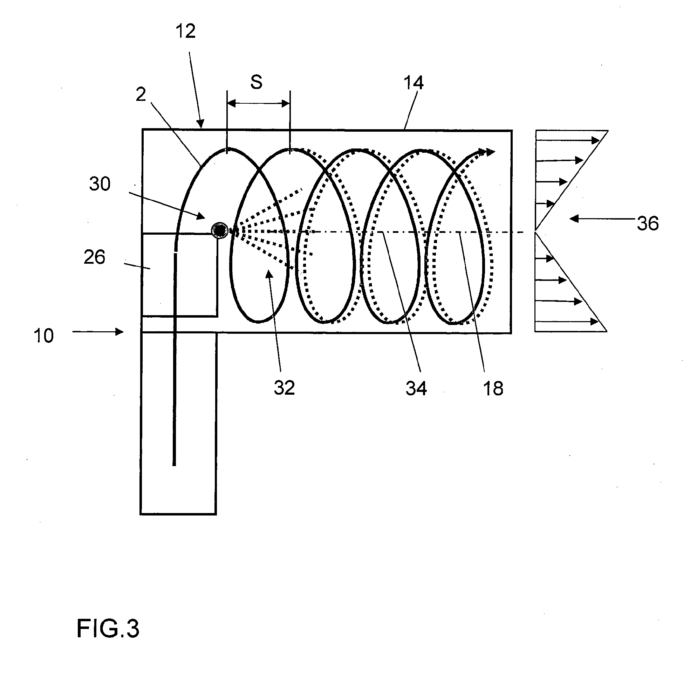

Darüber hinaus ist eine Einspritzeinrichtung zum Einspritzen von Reduktionsmittel 32 in den im zweiten Gehäuse 14 geführten Abgasstrom 2 vorgesehen, welche eine in Fig.3 symbolisiert dargestellte Einspritzdüse 30 beinhaltet.

Die Leitschaufel 26 leitet den Abgasstrom 2 in die Abgaseinlassöffnung 12 des zweiten Gehäuses 14 derart ein, dass sich im Inneren des zweiten Gehäuses 14 ein spiralförmiger Abgasstrom 2 mit einer Komponente in Axialrichtung und einer Komponente in Umfangsrichtung sowie mit einer Strömungsmittelachse 18 ausbildet, bei dem die Strömungsgeschwindigkeit der in Axialrichtung wirkenden Komponente des Abgasstroms 2 ausgehend von der Strömungsmittelachse in radialer Richtung gesehen ansteigt.

Die Strömungsgeschwindigkeit der in Axialrichtung wirkenden Komponente des Abgasstroms 2 in dem zweiten Gehäuse ist in Fig.1 und Fig.3 durch die parallelen Pfeile symbolisiert. Demnach ist die Strömungsgeschwindigkeit der in Axialrichtung wirkenden Komponente des Abgasstroms 2 im zweiten Gehäuse 14 im Bereich der Strömungsmittelachse 18 am geringsten und kann beispielsweise sogar gleich Null sein. Ausgehend von der Strömungsmittelachse 34 steigt dann die Strömungsgeschwindigkeit der in Axialrichtung wirkenden Komponente des Abgasstroms 2 in radialer Richtung gesehen an, um kurz vor der radial inneren Wandung des zweiten Gehäuses 14 einen Maximalwert zu erreichen. Unmittelbar an der radial inneren Wandung ist die Strömungsgeschwindigkeit naturgemäß gleich Null.

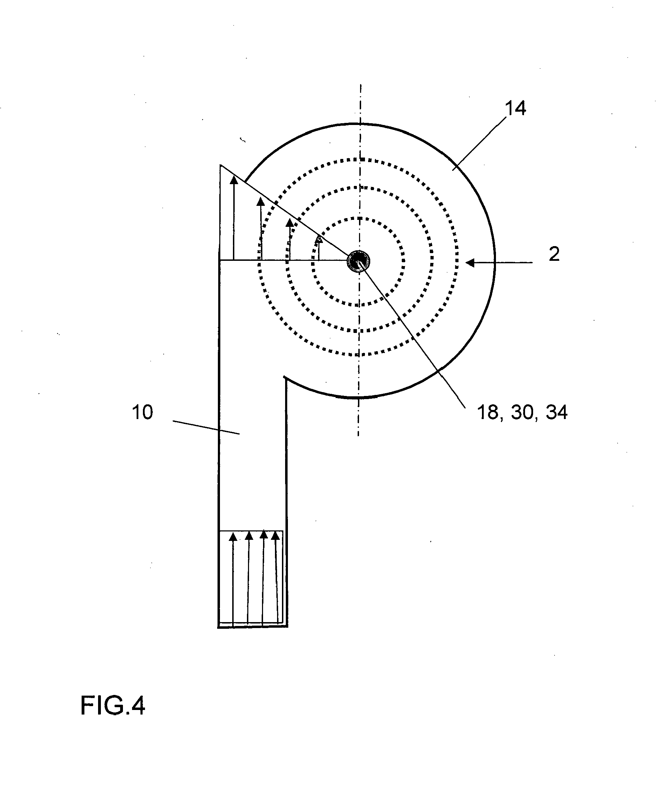

Die Strömungsgeschwindigkeit der in Umfangsrichtung wirkenden Komponente des Abgasstroms 2 in dem zweiten Gehäuse ist in Fig.4 durch die parallelen Pfeile sowie die gepunkteten kreisförmigen Linien symbolisiert. Demnach ist die Strömungsgeschwindigkeit der in Umfangsrichtung wirkenden Komponente des Abgasstroms 2 im zweiten Gehäuse 14 im Bereich der Strömungsmittelachse 18 am geringsten und kann beispielsweise sogar gleich Null sein. Ausgehend von der Strömungsmittelachse 34 steigt dann die Strömungsgeschwindigkeit der in Umfangsrichtung wirkenden Komponente des Abgasstroms 2 in radialer Richtung gesehen an, um kurz vor der radial inneren Wandung des zweiten Gehäuses 14 einen Maximalwert zu erreichen. Unmittelbar an der radial inneren Wandung ist die Strömungsgeschwindigkeit naturgemäß gleich Null.

Die Einspritzdüse 30 ist dabei derart angeordnet, dass das Reduktionsmittel in den spiralförmigen Abgasstrom 2 im zweiten Gehäuse 14 im Wesentlichen koaxial mit der Strömungsmittelachse 18 des spiralförmigen Abgasstroms 2 eingespritzt wird. Im vorliegenden Fall ist die Strömungsmittelachse 34 des Abgasstroms beispielsweise koaxial mit der Mittelachse 18 des zweiten Gehäuses 14. Der Sprühkegel des Reduktionsmittels sowie dessen nach der Mischung mit dem Abgasstrom 2 ebenfalls spiralförmiger Weg zusammen mit diesem innerhalb des zweiten Gehäuses 14 sind in Fig.3 als gepunktete Linie dargestellt. Insofern stellen das zweite Gehäuse 14 zusammen mit der Einspritzdüse 30 eine Mischvorrichtung für das Reduktionsmittel 32 mit dem Abgasstrom 2 dar.

Bevorzugt ist die Leitschaufel 26 in der Überströmkammer 10 derart ausgebildet und angeordnet, dass der spiralförmige Abgasstrom 2 im Inneren des zweiten Gehäuses 14 eine Steigung S (Fig.3) aufweist, welche kleiner oder gleich dem Strömungsdurchmesser D₂ des zweiten Gehäuses 14 ist.

Die Leitschaufel 26 erstreckt sich von einer inneren Wandung des sich verjüngenden Abschnitts 24 der Überströmkammer 10 in einer den Strömungsquerschnitt des sich verjüngenden Abschnitts 24 zusätzlich verengenden Weise winkelig weg (Fig.2, Fig.5). Damit führt die Leitschaufel 26 einerseits zu einer Querschnittsverengung und bewirkt andererseits eine Lenkung des Abgasstroms 2, so dass dieser als Umfangsströmung tangential in das zweite Gehäuse 14 eingeleitet wird, um dann dort den oben beschriebenen spiralförmigen Abgasstrom 2 auszubilden.

Andererseits ist die Leitschaufel 26 bevorzugt senkrecht zu einer gedachten Ebene angeordnet sein, welche senkrecht zur Mittelachse 20 des ersten Gehäuses 6 und senkrecht zur Mittelachse 18 des zweiten Gehäuses 14 ist. Bedingt durch die Querschnittsverengung mittels der Leitschaufel 26 wird der Abgasstrom 2 beschleunigt und in die Abgaseinlassöffnung 12 des zweiten Gehäuses 14 eingeleitet, um dort zunächst den Abgasstrom 2 in Umfangsrichtung zu leiten und dann den Abgasstrom 2 spiralförmig auszubilden.

Die Erzeugung des Dralls bzw. des spiralförmigen Abgasstroms 2 wird daher durch eine Querschnittsverengung in der Überströmkammer 10 erzielt, welche bevorzugt durch Merkmale definiert ist, die in Fig.2 und in Fig.5 gezeigt sind.

Die Ausbildung des Dralls im zweiten Gehäuse 14 ist beispielsweise abhängig vom Verhältnis des Innenradius r₂ des zweiten Gehäuses 14 zu dem Maß x, welches nicht kleiner als 1/0,25 sein sollte. Des Weiteren sollte das Maß y zwischen 0,5 x r₂ und 0,7 x r₁ liegen, wobei r₁ der Radius bzw. der halbe Strömungsdurchmesser D₁ des ersten Gehäuses 6 und r₂ der Radius bzw. der halbe Strömungsdurchmesser D₂ des zweiten Gehäuses 14 ist. Die beiden Maße x und y werden dabei in Bezug zur Mittelachse 18 des zweiten Gehäuses 14 gemessen und kennzeichnen die Lage des einen Endes der Leitschaufel 26 im Querschnitt der Übergangskammer 10 gesehen, wie in Fig.2 gezeigt ist. Das eine Ende der Leitschaufel 26 kann sich jedoch auch über die Mittelachse 18 des zweiten Gehäuses 14 hinaus erstrecken. Das andere Ende der Leitschaufel 26 erstreckt sich von der Innenwandung der ersten Gehäuses 6 bevorzugt tangential weg.

Für eine günstige Ausbildung des Dralls des Abgasstroms 2 bzw. des spiralförmigen Abgasstroms 2 in dem zweiten Gehäuse 14 ist es daher von Vorteil, dass die Leitschaufel 26 im Querschnitt gesehen tangential in Bezug zum kreisförmigen ersten Abschnitt 20 der Überströmkammer 10 bzw. zum ersten Gehäuse 6 angeordnet wird. Die Gesamtquerschnittsfläche der Überströmkammer 10 ist wegen des sich verjüngenden Abschnitts 24 dann bevorzugt größer als die Summe der Querschnittsflächen des ersten Abschnitts 20 und des zweiten Abschnitts 22 der Überströmkammer 10.

Wie aus Fig.5 hervorgeht, ist im Querschnitt der Überströmkammer 10 gesehen die Leitschaufel 26 senkrecht zu einer gedachten, sich von der Mittelachse 16 des ersten rohrförmigen Gehäuses 6 weg erstreckenden und dort gepunktet dargestellten Radiuslinie angeordnet, welche an ihrem leitschaufelseitigen Ende einen Ursprungspunkt der Leitschaufel 26', 26" markiert. Dadurch ergibt sich die tangentiale Lage der Leitschaufel 26' bzw. 26" in Bezug zum ersten Gehäuses 6. Dabei liegt die Radiuslinie in einem Winkelbereich von 49 Grad ausgehend von einem Grenzwinkel, wobei der Grenzwinkel 76,5 Grad ausgehend von einer die Mittelachse 16 des ersten rohrförmigen Gehäuses 6 und eine Mittelachse 18 des zweiten Gehäuses 14 enthaltenden Ebene gemessen wird, wie anhand von Fig.5 leicht vorstellbar ist.

In Fig.5 sind zwei Beispiele 26' und 26" für eine mögliche Lage einer Leitschaufel dargestellt. Beide Leitschaufeln 26' und 26", d.h. deren Leitschaufelebenen sind jeweils senkrecht zu der in gepunkteten Linien dargestellten Radiuslinie ausgehend von der Mittelachse 16 des ersten Gehäuses 6 angeordnet und haben ihren Ursprung am Ende einer solchen Radiuslinie. Die in Fig.5 angegebenen Koordinaten der Enden der beiden Leitschaufeln 26' und 26" in der Querschnittsebene gesehen beziehen sich auf die Mittelachse 18 des zweiten Gehäuses 14.

Die in Fig.5 dargestellten Maße und Winkel beschreiben jedoch lediglich ein bevorzugtes Ausführungsbeispiel und hindern den Fachmann nicht daran, die der Erfindung zugrunde liegende Idee in anderer Ausführung zu realisieren.

Besonders bevorzugt beinhaltet die Abgasbehandlungseinrichtung 1 wenigstens einen hier nicht gezeigten SCR-Katalysator, welcher in Strömungsrichtung des Abgasstroms 2 gesehen der Einspitzdüse 30 nachgeordnet ist und in welchen dann der mit dem Reduktionsmittel vermischte Abgasstrom 2 eingebracht wird.

### Bezugszeichenliste

- 1: Abgasnachbehandlungsvorrichtung
- 2: Abgasstrom
- 4: Abgaseinlassöffnung
- 6: erstes Gehäuse
- 8: Abgasauslassöffnung
- 10: Überströmkammer
- 12: Abgaseinlassöffnung
- 14: zweites Gehäuse
- 16: Mittelachse
- 18: Mittelachse
- 20: erster Abschnitt
- 22: zweiter Abschnitt
- 24: sich verjüngender Abschnitt
- 26: Leitschaufel
- 28: Boden
- 30: Einspritzdüse
- 32: Reduktionsmittel
- 34: Strömungsmittelachse
- 36: Abgasauslassöffnung

## Patentansprüche

1. Abgasbehandlungseinrichtung (1) für einen Abgasstrom (2) einer Brennkraftmaschine, mit
a) einem rohrförmigen oder zylindrischen ersten Gehäuse (6) mit einer Abgaseinlassöffnung (8) zum Einführen des Abgasstroms (2) in das erste Gehäuse (6) und mit einer Abgasauslassöffnung (8) zum Ausführen des Abgasstroms (2) aus dem ersten Gehäuse (6) sowie mit einem rohrförmigen oder zylindrischen zweiten Gehäuse (14) mit einer Abgaseinlassöffnung (12) zum Einführen des Abgasstroms (2) in das zweite Gehäuse (14) und mit einer Abgasauslassöffnung (36) zum Ausführen des Abgasstroms (2) aus dem zweiten Gehäuse, wobei das erste Gehäuse (6) und das zweite Gehäuse (14) parallel zueinander angeordnet sind,
b) einer Überströmkammer (10), welche die Abgasauslassöffnung (8) des ersten Gehäuses (6) mit der Abgaseinlassöffnung (12) des zweiten Gehäuses (14) verbindet und an dem ersten Gehäuse (6) und dem zweiten Gehäuse (14) derart stirnseitig angeordnet ist, das die Strömungsrichtung des Abgasstroms (2) in dem ersten Gehäuse (6) gegenüber der Strömungsrichtung des Abgasstroms (2) in dem zweiten Gehäuse (14) gegenläufig ist,
c) Einspritzmitteln (30) zum Einspritzen von Reduktionsmittel in den im zweiten Gehäuse (14) geführten Abgasstrom, ***dadurch gekennzeichnet,* dass**
d) in der Überströmkammer (10) Leitmittel (26) für den von der Abgasauslassöffnung (8) des ersten Gehäuses (6) in die Abgaseinlassöffnung (12) des zweiten Gehäuses (14) strömenden Abgasstrom (2) angeordnet sind, welche den Abgasstrom (2) in die Abgaseinlassöffnung (12) des zweiten Gehäuses (14) derart einleiten, dass sich im Inneren des zweiten Gehäuses (14) ein spiralförmiger Abgasstrom (2) mit einer Komponente in Axialrichtung und einer Komponente in Umfangsrichtung sowie mit einer Strömungsmittelachse (34) ausbildet, bei dem die in Axialrichtung wirkende Strömungsgeschwindigkeit ausgehend von der Strömungsmittelachse (34) in radialer Richtung gesehen ansteigt, und dass
e) die Einspritzmittel (30) derart angeordnet sind, dass das Reduktionsmittel (32) in den spiralförmigen Abgasstrom (2) im zweiten Gehäuse (14) im Wesentlichen koaxial mit der Strömungsmittelachse (34) des dort spiralförmigen Abgasstroms (2) eingespritzt wird.

2. Abgasbehandlungseinrichtung nach Anspruch 1, **dadurch gekennzeichnet, dass** die Strömungsmittelachse (34) des spiralförmigen Abgasstroms (2) im zweiten Gehäuse (14) koaxial mit einer Mittelachse (18) des zweiten Gehäuses (14) ist.

3. Abgasbehandlungseinrichtung nach einem der vorhergehenden Ansprüche, **dadurch gekennzeichnet, dass** die Leitmittel (26) in der Überströmkammer (10) derart ausgebildet und angeordnet sind, dass der spiralförmige Abgasstrom (2) im Inneren des zweiten Gehäuses (14) eine Steigung (S) aufweist, welche kleiner oder gleich dem Strömungsdurchmesser (D₂) des zweiten Gehäuses (14) ist.

4. Abgasbehandlungseinrichtung nach einem der vorhergehenden Ansprüche, **dadurch gekennzeichnet, dass** die Abgasauslassöffnung (8) des ersten Gehäuses (6) und die Abgaseinlassöffnung (12) des zweiten Gehäuses (14) koplanar angeordnet sind.

5. Abgasbehandlungseinrichtung nach einem der vorhergehenden Ansprüche, **dadurch gekennzeichnet, dass** der Strömungsdurchmesser (D₁) des ersten Gehäuses (6) größer als der Strömungsdurchmesser (D₂) des zweiten Gehäuses (14) ist.

6. Abgasbehandlungseinrichtung nach Anspruch 5, **dadurch gekennzeichnet, dass** im Querschnitt gesehen die Überströmkammer (10) einen ersten kreisförmigen Abschnitt (20) mit dem Strömungsdurchmesser (D₁) des ersten Gehäuses (6) und einen zweiten kreisförmigen Abschnitt (22) mit dem Strömungsdurchmesser (D₂) des zweiten Gehäuses (14) aufweist und zwischen dem ersten Abschnitt (20) und dem zweiten Abschnitt (22) ein sich verjüngender Abschnitt (24) vorgesehen ist, an dem die Leitmittel (26) angeordnet oder ausgebildet sind.

7. Abgasbehandlungseinrichtung nach einem der vorhergehenden Ansprüche, **dadurch gekennzeichnet, dass** die Leitmittel (26) wenigstens eine Leitschaufel beinhalten, welche sich von einer inneren Wandung des sich verjüngenden Abschnitts (24) der Überströmkammer (10) in einer den Strömungsquerschnitt des sich verjüngenden Abschnitts (24) verengenden Weise winkelig weg erstreckt.

8. Abgasbehandlungseinrichtung nach Anspruch 7, **dadurch gekennzeichnet, dass** die wenigstens eine Leitschaufel (26) senkrecht zu einer gedachten Ebene angeordnet ist, welche senkrecht zu einer Mittelachse (16) des ersten Gehäuses (6) und senkrecht zu einer Mittelachse (18) des zweiten Gehäuses (14) ist.

9. Abgasbehandlungseinrichtung nach Anspruch 8, **dadurch gekennzeichnet, dass** im Querschnitt der Überströmkammer (10) gesehen die wenigstens eine Leitschaufel (26) senkrecht zu einer gedachten, sich von der Mittelachse (16) des ersten Gehäuses (6) weg erstreckenden Radiuslinie angeordnet ist, welche an ihrem leitschaufelseitigen Ende einen Ursprung der Leitschaufel (26) markiert, wobei die Radiuslinie in einem Winkelbereich von 49 Grad ausgehend von einem Grenzwinkel liegt und wobei der Grenzwinkel 76,5 Grad ausgehend von einer die Mittelachse (16) des ersten Gehäuses (6) und die Mittelachse (18) des zweiten Gehäuses (14) enthaltenden Ebene gemessen wird.

10. Abgasbehandlungseinrichtung nach einem der vorhergehenden Ansprüche, **dadurch gekennzeichnet, dass** die Einspritzmittel (26) eine Einspritzdüse für das Reduktionsmittel (32) aufweisen, welche im Wesentlichen in der Ebene der Abgaseinlassöffnung (12) des zweiten Gehäuses (14) angeordnet ist.

11. Abgasbehandlungseinrichtung nach einem der vorhergehenden Ansprüche, **dadurch gekennzeichnet, dass** sie wenigstens einen SCR-Katalysator beinhaltet, welcher in Strömungsrichtung des Abgasstroms (2) gesehen den Einspitzmitteln (30) nachgeordnet ist.
